(19) Europäisches Patentamt
European Patent Office
Office européen des brevets

(11) **EP 3 795 838 A1**

(12) **DEMANDE DE BREVET EUROPEEN**

(43) Date de publication:
**24.03.2021 Bulletin 2021/12**

(51) Int Cl.:
*F04D 17/06* (2006.01)    *F04D 29/30* (2006.01)
*H02K 9/06* (2006.01)

(21) Numéro de dépôt: **20196246.1**

(22) Date de dépôt: **15.09.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **20.09.2019 FR 1910410**

(71) Demandeur: **VALEO EQUIPEMENTS ELECTRIQUES MOTEUR**
**94046 Créteil Cedex (FR)**

(72) Inventeurs:
• **SEGARD, Pierre**
**62630 ETAPLES SUR MER (FR)**
• **CHAILLOU, Jimmy**
**62630 ETAPLES SUR MER (FR)**
• **JOZEFOWIEZ, Eric**
**62630 ETAPLES SUR MER (FR)**
• **DELIANNE, Henri**
**62630 ETAPLES SUR MER (FR)**
• **PERREAUT, Sylvain**
**62630 ETAPLES SUR MER (FR)**
• **MARGUERITTE, David**
**62630 ETAPLES SUR MER (FR)**
• **EL-GHAZAL, Mohamed**
**62630 ETAPLES SUR MER (FR)**
• **MBARKI, Marouane**
**94046 CRETEIL CEDEX (FR)**
• **ALAOUI BENZAKROUM, Mohamed**
**78322 LA VERRIERE (FR)**

(74) Mandataire: **Ricard, Amandine**
**Valeo Equipements Electriques Moteur SAS**
**2, rue André Boulle**
**94046 Créteil Cedex (FR)**

(54) **VENTILATEUR DE ROTOR AMÉLIORÉ**

(57)    Un aspect de l'invention concerne un ventilateur comprenant : un plateau (200, 100), des pales (101, 201) comprenant chacune : un bord de maintien (2010M) s'étendant du plateau, une paroi (1010, 2010) de ventilation s'étendant en saillie du bord de maintien (2010M) et comprenant un bord libre d'attaque à flux radial (2010AR), un bord libre de fuite à flux radial (1010FR, 2010FR) opposé au bord libre d'attaque à flux radial et un bord libre d'attaque à flux axial (1010AA, 2010AA) s'étendant du bord libre d'attaque à flux radial au bord libre de fuite à flux radial, le bord libre d'attaque à flux axial étant situé à l'opposé axialement du bord de maintien, une projection axiale (P2010AA) du bord libre d'attaque à flux axial d'au moins une pale sur un plan transversal du plateau s'étendant en dehors du bord de maintien.

[Fig. 3]

EP 3 795 838 A1

**Description**

**DOMAINE TECHNIQUE DE L'INVENTION**

Le domaine technique de l'invention est celui des ventilateurs de rotor de machine électrique de véhicules automobiles. La machine électrique est un alternateur ou alternateur-démarreur ou machine réversible ou moteur électrique de véhicules automobiles.

Plus particulièrement le domaine technique de l'invention est celui des ventilateurs internes de rotor de machine électrique de véhicules automobiles, c'est-à-dire comportant des machines électriques comprenant deux ventilateurs situés de part et d'autre du rotor, à l'intérieur d'un carter de la machine électrique.

**ARRIERE-PLAN TECHNOLOGIQUE DE L'INVENTION**

Lors de la rotation du rotor d'une machine électrique, les ventilateurs provoquent la circulation d'un flux d'air de refroidissement important à l'intérieur de cette machine, via des ouïes ménagées dans un carter.

Classiquement, ces ventilateurs sont réalisés par découpage et pliage de tôle d'acier et sont rapportés chacun, par exemple par soudage ou sertissage, sur un flanc d'une roue polaire du rotor ou sont réalisés en plastique et sont soit collés soit bouterollés par exemple sur l'isolant de corps de bobine de ce même rotor. Ces ventilateurs sont appelés ventilateur centrifuge pour refroidir les chignons du stator mais ne créent pas ou un très faible flux d'air axial pour refroidir le rotor.

Ces dernières années le besoin en puissance électrique a fortement augmenté. La hausse de la puissance demandée va inévitablement s'accompagner d'une hausse des pertes de la machine, même si des innovations seront nécessaires afin de limiter cet impact. La hausse des pertes est majoritairement due aux pertes Joules qui sont proportionnelles au carré du courant de la machine.

Dans la technique connue, les pales de ces ventilateurs sont plates, avec un profil transversal généralement parallèle à l'axe de rotation du rotor, et inclinées par rapport à une direction radiale, l'entrée d'air s'effectuant axialement et la sortie d'air s'effectuant radialement. Ces ventilateurs sont dit ventilateur à centrifuge et oriente le flux d'air radialement vers l'extérieur.

De tels ventilateurs pour alternateurs sont par exemple connus du document FR-A-2 685 572.

Il existe aussi des ventilateurs axiaux comprenant une partie centrale avec des pales s'étendant axialement et une partie périphérique reliant l'ensemble des autres extrémités des pales. Un tel ventilateur ne refroidit pas un bobinage du stator entourant le rotor. Il est donc nécessaire d'avoir un système de refroidissement du bobinage du stator en outre du ventilateur, par exemple par le biais d'un circuit d'eau passant autour du stator. Cependant un tel système de refroidissement est coûteux et diminue le rendement de la machine électrique du fait de l'alimentation de son système de refroidissement.

De plus, l'espace disponible dans le compartiment moteur est de plus en plus faible ce qui implique une exigence de machines électriques de plus en plus petites et le nombre d'équipements électriques augmente dans un véhicule impliquant des machines électriques de plus en plus performantes et puissantes pour produire de l'électricité en mode alternateur. Cela se traduit par un ratio de puissance sur volume de plus en plus grand. En outre cette réduction d'espace disponible sous le capot moteur a aussi une conséquence sur la température ambiante autour du moteur qui est passée en 20 ans par exemple de 80°C à environ 120°C.

De nouveau type de bobinage du stator, tel que à épingles, ont permis d'augmenter le rendement de la machine électrique et ainsi d'augmenter la puissance des machines électriques dont la puissance absorbée des rotors. Les pertes Joules sont proportionnelles au carré du courant de la machine ce qui entraîne une augmentation de la chaleur produite par ces pertes joules.

Il y a donc un besoin d'améliorer le refroidissement des machines électriques sans augmenter le volume de la machine électrique.

Il pourrait être envisageable d'assembler des composants qui ont une limite thermique augmentée par rapport aux pièces standards d'aujourd'hui mais ceci aurait un surcoût rédhibitoire. De même, il pourrait être envisagé d'augmenter le débit d'air des ventilateurs, par exemple disposer deux ventilateurs un axiaux et un à centrifuge ou alors d'augmenter le diamètre extérieur des ventilateurs mais ceci aurait pour conséquence d'augmenter le niveau de bruit aérodynamique de la machine électrique ainsi que le diamètre de la machine sans résoudre le problème de refroidissement du rotor.

**RESUME DE L'INVENTION**

L'invention offre une solution aux problèmes évoqués précédemment, en permettant d'avoir un ventilateur à double flux

Un aspect de l'invention concerne un ventilateur d'un rotor de machine électrique tournante comprenant : une ouverture axiale d'un axe de rotation ; un plateau s'étendant dans un plan transversal par rapport à l'axe de rotation et comprenant : une surface radiale intérieure destinée à être en vis-à-vis du rotor, une surface radiale extérieure, et dans lequel l'ouverture axiale traverse le plateau de la surface radiale intérieure à la surface radiale extérieure. Le ventilateur comprend également des pales comprenant chacune : un bord de maintien s'étendant du plateau pour maintenir la pale au plateau, une paroi de ventilation s'étendant en saillie du bord de maintien et comprenant un bord libre d'attaque à flux radial, un bord libre de fuite à flux radial opposé au bord libre d'attaque à flux radial et un bord libre d'attaque à flux axial s'étendant du bord libre d'attaque à flux radial au bord libre de fuite à flux radial, le bord libre d'attaque à flux axial étant situé à l'opposé axialement du bord de maintien. De plus, ladite paroi comprend une surface d'attaque et une surface de fuite, lesdites surfaces étant délimitées par lesdits bords, la surface d'attaque étant la surface poussant l'air lors de la rotation du ventilateur. En outre, une projection axiale du bord libre d'attaque à flux axial d'au moins une pale sur un plan transversal du plateau s'étend en dehors du bord de maintien.

Grâce à l'invention, le ventilateur éjecte un flux d'air radial comme un ventilateur centrifuge classique ainsi qu'un flux d'air axial vers l'intérieur du rotor permettant d'améliorer le refroidissement du rotor. En effet, le fait d'avoir un bord libre d'attaque à flux axial qui s'étend en dehors de la projection axiale du bord de maintien permet de produire un flux d'air axial supérieur à ceux des ventilateurs à force centrifuge. En outre, on peut soit augmenter le nombre de pales soit augmenter l'inclinaison de la paroi telle que la projection du bord libre d'attaque à flux axial soit plus éloignée du bord de maintien pour augmenter l'orientation du flux axial.

Le ventilateur est donc ici un ventilateur axialo-centrifuge, c'est-à-dire un ventilateur à flux axial et à flux radial par centrifugation et les pales sont des pales à double orientation de flux.

Par bord de maintien de la pale on entend l'extrémité arrière de la pale s'étendant du plateau.

Par bord d'attaque et bord de fuite de flux radial on entend que le sens du flux du fluide projeté par la force centrifuge passe en grande partie du bord d'attaque vers le bord de fuite. Les bords de fuite et d'attaque à flux axial s'étendent axialement de manière à former respectivement des extrémités de la pale dans un plan transversal. La pale est notamment agencée de sorte que le bord d'attaque à flux radial soit plus proche de l'axe de rotation que le bord de fuite à flux radial.

Par bord libre d'attaque à flux axial on entend que du flux du fluide aspiré axialement passe par le bord libre d'attaque à flux axial. Le bord libre d'attaque à flux axial s'étend dans un plan sensiblement transversal de manière à former une extrémité axiale de la pale.

Outre les caractéristiques qui viennent d'être évoquées dans le paragraphe précédent, le ventilateur selon un aspect de l'invention peut présenter une ou plusieurs caractéristiques complémentaires parmi les suivantes, considérées individuellement ou selon toutes les combinaisons techniquement possibles :

-    Dans lequel le ventilateur est en acier et les pales sont par exemple soudées au plateau.

-    Dans lequel le ventilateur est en plastique et est par exemple moulé.

-    Dans lequel le plateau est en métal et les pales sont en plastique par exemple surmoulées sur le plateau.

-    Dans lequel la paroi de la pale a une épaisseur constante telle que la pale a une épaisseur constante du bord d'attaque à flux axial jusqu'à une portion de fixation comprenant le bord de maintien.

-    Dans lequel le bord de maintien est incliné par rapport à un rayon de l'axe de rotation. Cela permet d'améliorer les flux d'air radial et axial de ventilation par force centrifuge.

-    Dans lequel, la paroi comprend un rayon de courbure radial s'étendant dans un plan transversal à l'axe de manière à ce que la surface d'attaque soit concave et la surface de fuite soit convexe selon ce rayon de courbure. Cela permet d'améliorer le flux radial par force centrifuge en réduisant les pertes.

-    Dans lequel le ventilateur comprend un congé de rigidification d'attaque d'un côté d'attaque de la paroi de la pale pour rigidifier la pale au plateau.

-    Dans lequel le plateau comprend des encoches ou des ouvertures entre les pales. Cela permet de libérer un passage pour le fluide dans le sens du flux axial.

-    Selon un premier mode de réalisation, la projection axiale d'au moins une portion du bord libre d'attaque à flux axial sur le plateau s'étend sur au moins une portion de la surface radiale du plateau entre deux pales. Cela permet à la pale de former un flux d'air axial projeté vers l'intérieur du rotor en outre du flux d'air radial par force centrifuge.

-    Selon une réalisation, le plateau présente une périphérie externe annulaire. Autrement dit, le plateau est dépourvu d'encoche agencée sur sa périphérie externe. Cela permet d'améliorer la tenue mécanique du ventilateur.

-    Selon un exemple de ce premier mode de réalisation, la paroi d'au moins une pale comprend un rayon de courbure axial s'étendant dans un plan parallèle à l'axe de manière à ce que la surface d'attaque soit concave et la surface de fuite soit convexe selon ce rayon de courbure axial. Ce rayon de courbure axial permet de former un flux d'air axial avec une réduction de perte projeté vers l'intérieur en outre du flux d'air radial par force centrifuge. Par exemple, le plan parallèle à l'axe est un plan orthoradial.

-    Selon cet exemple, le rayon de courbure axial est compris entre dix millimètres et trente millimètres.

-    Selon cet exemple et l'exemple dans lequel la paroi comprenant un rayon de courbure radial, le rayon de courbure radial est 3 fois supérieure au rayon de courbure axial.

-    Selon un exemple, la paroi d'au moins une pale présente un angle de courbure axial compris entre 130° et 160°, ledit angle étant mesuré dans un plan de coupe de la pale parallèle à l'axe de rotation et perpendiculaire à un plan comprenant l'axe de rotation et passant par le centre du bord libre d'attaque à flux radial de la paroi de la pale, l'angle étant situé entre :

- un plan extérieur passant par une arête d'attaque du bord libre d'attaque à flux axial et un milieu axial de la surface de fuite et

- un plan intérieur passant par un premier point de mesure situé au milieu du bord de maintien et ledit milieu axial de la surface de fuite.

- Selon une mise en œuvre de cet exemple, l'angle de courbure augmente lorsqu'on se déplace du bord libre d'attaque à flux radial vers le bord libre de fuite à flux radial. Cela permet d'optimiser le refroidissement global de la machine. En effet, le fait d'avoir un petit angle de courbure au niveau du bord libre de fuite permet de générer l'air au pied de la pale pour augmenter la quantité d'air généré et le fait d'avoir un grand angle de courbure au niveau du bord libre d'attaque permet d'évacuer une grande quantité d'air et d'éviter de créer une zone de re-bouclage d'air au centre de la pale.

- Selon une mise en œuvre de cet exemple, au moins une pale est configurée de manière à comporter un ratio de courbure de l'angle de la courbure divisé par une longueur de pale, mesurée entre un milieu du bord de maintien et l'arête d'attaque du bord libre d'attaque à flux axial, compris entre 8 et 18.

- Par exemple, le ratio de courbure augmente dans la pale en déplaçant :

- l'angle de courbure axial à un angle de courbure extérieur vers l'extérieur situé au milieu entre le milieu axiale de la surface de fuite et l'arête d'attaque du bord d'attaque axial,

- le plan de coupe vers le bord libre de fuite à flux radial et

- le premier point de mesure à un deuxième point de mesure situé au milieu de l'épaisseur de la paroi plus éloigné du bord de maintien.

- Selon une mise en œuvre de cet exemple, l'angle de courbure axial a un rayon de courbure dont l'axe est dans un plan perpendiculaire à l'axe, tel que la surface d'attaque est concave et la surface de fuite est convexe selon ce rayon de courbure.

- Selon un exemple de ce premier mode de réalisation pouvant se combiner à l'exemple précédent, l'au moins une pale comprend un ratio d'inclinaison égale à :

- une hauteur d'arête d'attaque mesurée dans un plan de coupe parallèle à l'axe de rotation et perpendiculaire à un plan comprenant l'axe de rotation passant par le centre de la paroi de la pale entre une arête d'attaque du bord libre d'attaque à flux axial et la surface extérieure du plateau, divisée par

- une longueur de projection d'arête d'attaque mesurée dans le même plan de coupe entre la projection de l'arête d'attaque du bord d'attaque à flux axial sur la surface extérieure du plateau et un premier point de mesure situé au milieu de l'épaisseur de la paroi et au milieu du bord de maintien et le milieu axial de la surface de fuite, le ratio d'inclinaison étant compris entre 1 et 2.

- En particulier, dans cet exemple, l'au moins une pale présente le ratio d'inclinaison qui en déplaçant le plan de coupe vers le bord libre de fuite à flux radial et en déplaçant le premier point de mesure à un deuxième point de mesure situé au milieu de l'épaisseur de la paroi plus éloigné du bord de maintien que le premier point de mesure.

- Selon un deuxième mode de réalisation pouvant être combiné au mode de réalisation précédent, le bord libre de fuite à flux radial d'au moins une pale comprend un rayon maximum par rapport à l'axe de rotation supérieur au rayon maximum par rapport audit axe pris au niveau de la pale. Cela permet de projeter efficacement un flux axial vers l'intérieur pour lécher la roue polaire du rotor.

- Selon un exemple de ce mode de réalisation, la paroi comprend un bord libre de fuite à flux axial s'étendant dans un plan transversal à partir d'un bord périphérique du plateau jusqu'au bord libre de fuite à flux radial.

- Selon cet exemple, la longueur radiale du bord libre de fuite à flux axial est comprise entre 0.5 et 1.5 fois la longueur du bord de maintien.

- Selon cet exemple, la longueur radiale du bord libre de fuite à flux axial est inférieure à la longueur du bord de maintien.

- Selon un exemple de ce mode de réalisation, le bord libre de fuite à flux axial s'étend radialement de la surface intérieure du plateau jusqu'au bord libre de fuite à flux radial. Cela permet d'améliorer le flux axial. Autrement dit, la pale comprend une portion dans l'extension de l'épaisseur du plateau.

- Selon une première variante du premier mode de réalisation, le ventilateur comprend les caractéristiques du deuxième mode de réalisation en combinaison avec une ou des caractéristiques des différents exemples de ce deuxième mode de réalisation.

- Selon une deuxième variante du premier mode de réalisation du ventilateur, le bord libre de fuite à flux radial, d'au moins une pale, comprend un rayon maximum par rapport à l'axe de rotation égal au rayon maximum par rapport à l'axe de rotation du plateau au niveau de la pale.

- Selon une première variante du deuxième mode de réalisation du ventilateur, le ventilateur comprend les caractéristiques du premier mode de réalisation en combinaison avec une ou des ou sans les différentes caractéristiques des différents exemples de ce premier mode de réalisation.

- Selon une deuxième variante du premier mode de réalisation du ventilateur, la paroi de l'au moins une pale s'étend parallèlement à l'axe de rotation.

- Selon un exemple de ces deux modes de réalisation, le bord libre d'attaque à flux axial est incliné par rapport au plan transversal tel que le bord libre d'attaque à flux radial est moins long que le bord libre de fuite à flux radial.

- Selon une variante de cet exemple, la paroi comprend un arrondi entre le bord libre d'attaque à flux axial et le bord libre d'attaque à flux radial ayant un rayon moins long que le bord libre de fuite à flux radial.

Un autre aspect de l'invention concerne un rotor comprenant une roue polaire comprenant un flanc et un ventilateur, précédemment décrit, fixé à la roue polaire en ayant la surface intérieure radiale contre le flanc de ladite roue polaire.

Un autre aspect de l'invention concerne une machine électrique tournante comprenant un rotor tel que décrit précédemment. La machine électrique tournante forme notamment un alternateur, un alterno-démarreur, une machine réversible ou un moteur électrique.

Par exemple, la machine comprend, en outre, un stator notamment agencé pour entourer le rotor, un palier avant supportant un arbre du rotor et le stator, un palier arrière supportant ledit arbre et ledit stator et comprenant des ouïes axiales et radiales, le ventilateur du rotor étant situé entre le flanc de la roue polaire et le palier arrière.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

[Fig. 1] montre une représentation schématique d'un rotor vu radialement, comprenant un ventilateur selon un premier mode de réalisation l'invention.

[Fig. 2] montre une représentation schématique d'un rotor vu axialement comprenant un ventilateur selon un troisième mode de réalisation l'invention.

[Fig. 3] montre une représentation schématique en perspective d'une roue polaire et d'un ventilateur selon le troisième mode de réalisation.

[Fig. 4] montre une représentation schématique en perspective du ventilateur selon le troisième mode de réalisation d'un côté intérieur du rotor.

[Fig. 5] montre une représentation schématique vu axialement d'une partie du ventilateur selon le troisième mode de réalisation.

[Fig. 6] montre une représentation schématique d'une coupe de la figure 5 d'une partie du ventilateur selon le troisième mode de réalisation.

[Fig. 7] montre une représentation schématique d'une autre coupe de la figure 5 d'une partie du ventilateur selon le troisième mode de réalisation.

[Fig. 8] montre une représentation schématique d'une coupe radiale d'une partie du ventilateur selon le troisième mode de réalisation.

## DESCRIPTION DETAILLEE

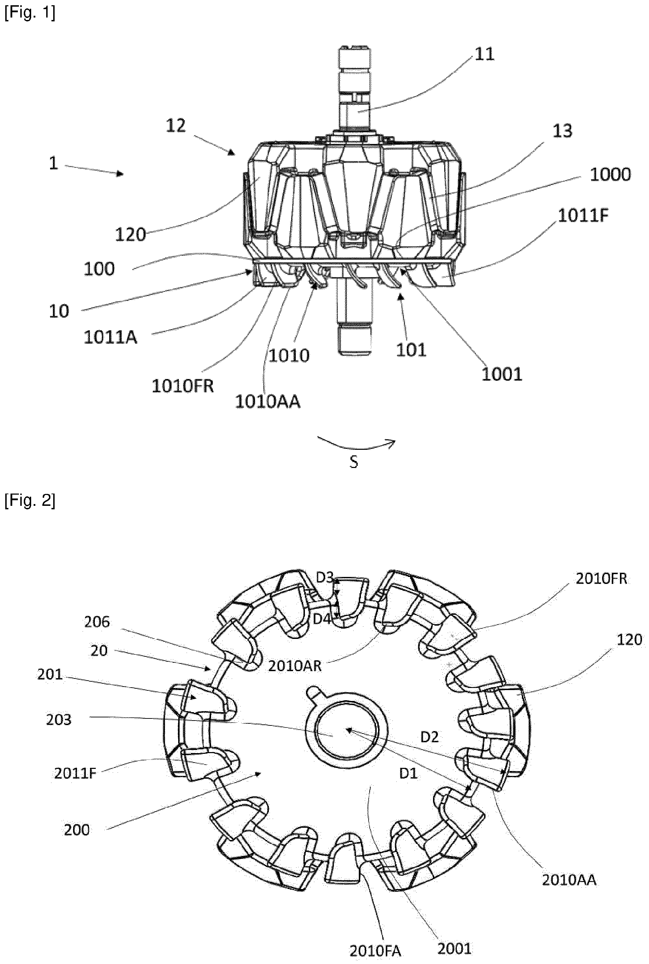

La figure 1 représente un rotor 1 d'une machine électrique vue radialement, comprenant un ventilateur 10 selon un premier mode de réalisation l'invention.

Le rotor 1 comprend un arbre rotor 11, deux roues polaires 12, en l'occurrence à griffes, une bobine non représentée, ici des aimants 13 entre les griffes 120 des roues polaires.

Le ventilateur 10 comprend un plateau 100 comprenant une ouverture axiale d'un axe de rotation traversée par l'arbre rotor 11. Le plateau 100 s'étend dans un plan transversal par rapport à l'axe de rotation X. Le plateau 100 comprend une surface radiale intérieure 1000 fixée contre un flanc d'une des deux roues polaires 12.

La fixation du ventilateur 10 sur la roue polaire 12 peut être effectuée par exemple par collage, vissage, soudage, clipsage etc...

Le plateau 100 comprend en outre une surface radiale extérieure 1001 opposée axialement par rapport à ladite surface intérieure 1000, lesdites surface s'étendant dans un plan transversal

Le ventilateur 10 comprend des pales à double orientation de flux 101 s'étendant de la surface radiale extérieure 1001 vers l'extérieur c'est-à-dire à l'opposé du sens « vers la roue polaire du rotor » appelé dans la suite vers l'intérieur. En l'occurrence dans cet exemple de réalisation, toutes les pales du ventilateur 10 sont des pales à double orientation de flux 101. Alternativement, le ventilateur pourrait comporter des pales centrifuges et des pales à double orientation de flux 101, par exemple disposées de façon alternées circonférentiellement. Les pales à double orientation de flux 101 dans la suite sont appelées pales.

Chaque pale 101 comprend une paroi de ventilation 1010 comprenant une surface d'attaque 1011A et une surface de fuite 1011F. La surface d'attaque 1011A permet de pousser l'air lorsque le rotor tourne. Autrement dit, lorsque le ventilateur est en rotation suivant la direction de rotation S indiquée sur la figure 1, un point situé entre deux pales traverse d'abord la surface d'attaque de la pale puis la surface de fuite de ladite pale.

Chacune des pales 101 comprend en outre un bord de maintien (non référencé sur ce mode de réalisation) s'étendant du plateau 100 pour maintenir la pale 101 au plateau 100. Le bord de maintien est incliné par rapport à un rayon de l'axe de rotation X.

La paroi de ventilation 1010, s'étendant du bord de maintien, comprend un bord libre d'attaque à flux radial, non référencé sur ce mode de réalisation. En outre, paroi 1010 comprend un bord libre de fuite à flux radial 1010FR opposé au bord libre d'attaque à flux radial. Le bord libre de fuite à flux radial 1010FR est le bord le plus éloigné de l'axe de rotation tandis que le bord libre d'attaque à flux radial est le plus proche de l'axe de X. Le bord libre de fuite à flux radial 1010FR et le bord libre d'attaque à flux radial sont courbés selon un rayon de courbure axial RA. Le rayon de courbure est défini par un rayon d'un cercle compris dans un plan axial parallèle à l'axe de rotation. Autrement dit, la paroi 1010 s'étend, dans une direction axiale, suivant un arc de cercle.

Alternativement, le bord libre de fuite à flux radial 1010FR et le bord libre d'attaque à flux radial pourraient être plans et inclinés par rapport au plateau entre une orientation radiale et axiale, par exemple à 45°.

Chaque paroi de ventilation 1010 de pale 101 comprend un bord libre d'attaque à flux axial 1010AA s'étendant radialement d'une extrémité du bord libre d'attaque à flux radial au bord libre de fuite à flux radial 1010FR. Le bord libre d'attaque à flux axial 1010AA étant situé à l'opposé axialement du bord de maintien.

Comme illustré dans la figure 1, la paroi de ventilation 1010 de chaque pale est telle que la projection du bord libre d'attaque à flux axial 1010AA sur le plan transversal du plateau 100 s'étend en dehors du bord de maintien. Autrement dit, au moins une partie de la projection ne se superpose pas au bord de maintien. Dans ce premier mode de réalisation, la paroi est inclinée telle que la projection axiale d'au moins une portion du bord libre d'attaque à flux axial 1010AA sur le plateau 100 s'étend sur la surface radiale extérieure 1001 du plateau 100 entre deux pales 101. En particulier dans cet exemple, la projection axiale de tout le bord libre d'attaque à flux axial 1010AA sur le plateau 100 s'étend sur la surface radiale extérieure 1001 du plateau 100 entre deux pales 101. Ainsi, les surfaces d'attaque 1011A des pales et les surfaces de fuites 1011F sont courbées. En particulier, la surface d'attaque 1011A présente une courbure concave, par rapport au rayon de courbure c'est-à-dire par rapport à un référentiel pris dans la pale, et la surface de fuite 1011F présente une courbure convexe, par rapport au rayon de courbure c'est-à-dire par rapport à un référentiel pris dans ladite pale.

Selon un deuxième mode de réalisation non représenté, la projection axiale d'au moins une portion du bord libre d'attaque à flux axial comprend une partie qui s'étend sur le plateau sur le bord de maintien et une partie qui s'étend en dehors dudit bord de maintien. Dans ce cas, le bord libre de fuite à flux radial présente un rayon maximum par rapport à l'axe de rotation supérieur au rayon maximum par rapport à l'axe de rotation du plateau au niveau de la pale. Par rayon maximum, on entend la distance la plus éloignée de l'axe de rotation. Ainsi, la paroi de ventilation est prolongée radialement par rapport au plateau telle que la projection du bord libre d'attaque à flux axial sur le plan transversal du plateau s'étend en dehors du bord de maintien.

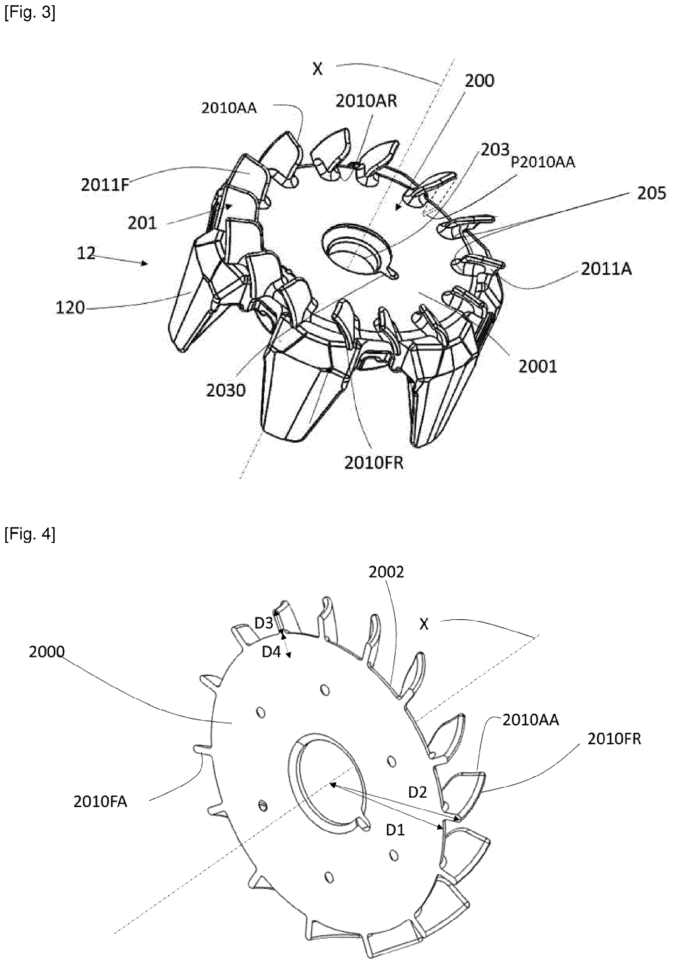

La figure 2 représente une roue polaire 12 du rotor 1 d'une machine électrique vue axialement, et un ventilateur 20 selon un troisième mode de réalisation l'invention. La figure 2 représente vu axialement le ventilateur 20 contre un flanc d'une roue polaire 12 comprenant des griffes 120. Dans cette figure 2, on peut voir que le ventilateur 20 comprend une ouverture axiale 203 d'un axe de rotation X adaptée à être traversée par l'arbre rotor 11. La figure 3 représente le ventilateur 20 et la roue polaire 12 selon une vue en perspective dont l'axe de rotation X est représenté. Dans cet exemple de ce troisième mode de réalisation, pouvant s'appliquer au ventilateur des premier et deuxième modes de réalisation, l'ouverture 203 comprend une encoche 2030 permettant de rendre solidaire en rotation le ventilateur 20 à l'arbre rotor et donc de résister au couple de rotation. Le ventilateur 20 peut être collé, soudé ou clipsé contre le flanc de la roue polaire 12 pour maintenir en translation axial le ventilateur 20 contre ledit flanc. Le ventilateur 20 est donc fixe par rapport à la roue polaire 12.

Le rotor de ce troisième mode de réalisation est identique au rotor 1 du premier mode de réalisation sauf en ce que le ventilateur 20 est différent en ce qu'il comprend en outre les caractéristiques du deuxième mode de réalisation.

Le ventilateur 20 est différent du ventilateur 10 de la figure 1 en ce que sa projection axiale du bord libre d'attaque à flux axial 2010AA d'une pale 201 présente une première portion qui s'étend sur la surface radiale extérieure 2001 du plateau 200 entre deux pales 201 et une deuxième portion qui s'étend au-delà radialement du plateau.

En effet, on peut voir sur la figure 2 que le bord libre de fuite à flux radial 2010FR de chacune des pales 201 comprend un rayon maximum D2 par rapport à l'axe de rotation X supérieur au rayon maximum D1 par rapport à l'axe de rotation X du plateau 200.

La paroi 2010 comprend un bord libre de fuite à flux axial 2010FA, visible notamment sur la figure 4, s'étendant radialement à partir d'un bord périphérique 2002 du plateau 200 jusqu'au bord libre de fuite à flux radial 2010FR.

Une longueur D3 mesurée radialement, appelée longueur radiale D3, du bord libre de fuite à flux axial 2010FA est comprise entre 0.5 et 1.5 fois une longueur D4 mesurée radialement, appelée longueur radiale D4 du bord de maintien 2010M. En l'occurrence dans cet exemple la longueur radiale D3 est égale à la longueur radiale D4. Cette plage de valeur est également applicable au deuxième mode de réalisation.

Dans cet exemple de ce troisième mode de réalisation ou du deuxième mode de réalisation, le bord libre de fuite à flux axial 2010FA s'étend radialement de la surface radiale intérieure 2000 du plateau 200 jusqu'au bord libre de fuite à flux radial 2010FR. Ainsi, la longueur axiale du bord libre de fuite à flux radial 2010FR est plus longue de l'épaisseur du plateau 200 qu'une hauteur de pale mesurée axialement à partir de la surface radiale extérieure 2001 du plateau 200.

Selon un autre exemple non représenté de ce mode ce troisième mode de réalisation ou du deuxième mode de réalisation, le bord libre de fuite à flux axial 2010FA s'étend radialement de la surface radiale extérieure 2001 du plateau 200 jusqu'au bord libre de fuite à flux radial 2010FR. Dans ce cas, la longueur axiale du bord libre de fuite à flux radial 2010FR correspond à la hauteur axiale de la pale 201.

Comme dans l'exemple du premier mode de réalisation, le bord de maintien 2010M de chaque pale est incliné par rapport à un rayon de l'axe de rotation X. C'est-à-dire que la paroi 2010 de la pale ne s'étend pas dans un rayon par rapport à l'axe de rotation X.

Selon un exemple des trois modes de réalisation, le ventilateur 20 comprend pour chaque pale 201 un congé de rigidification de fuite 206 s'étendant de la surface de fuite 2011F de la paroi 2010 de la pale 201 au plateau 200 pour rigidifier ladite pale 201.

Selon un exemple des trois modes de réalisation, le ventilateur 20 comprend pour chaque pale 201 un congé de rigidification d'attaque 205 s'étendant de la surface d'attaque 2011A de la paroi 2010 de la pale 201 au plateau 200 pour rigidifier ladite pale 201.

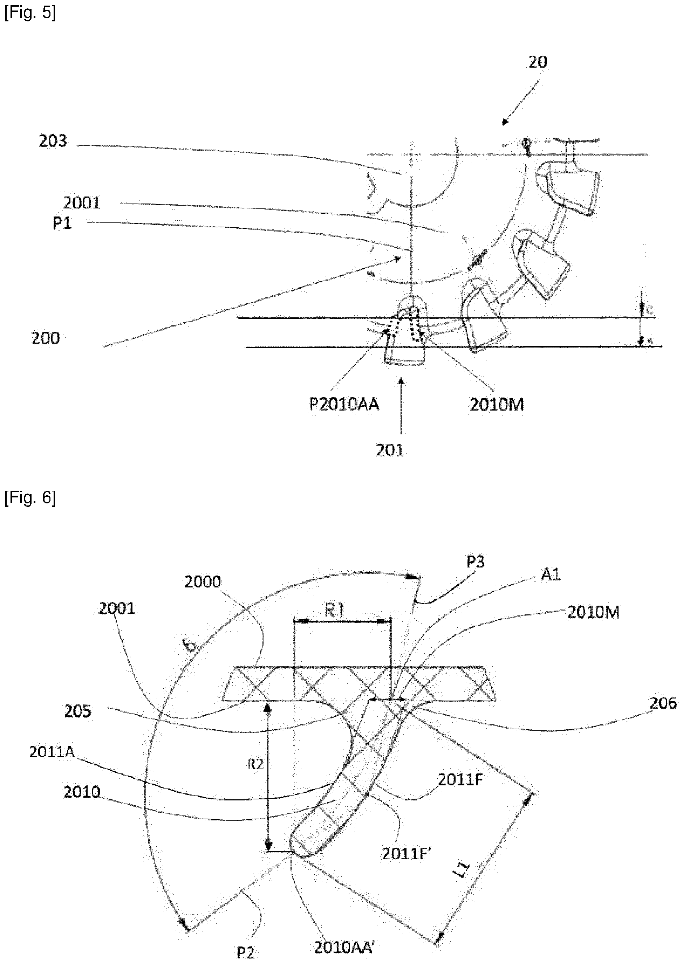

Dans cet exemple, comme dans le premier mode de réalisation, la projection axiale P2010AA, visible en pointillés sur les figures 3 et 5, de la portion du bord libre d'attaque à flux axial 2010AA sur le plateau 200 s'étend sur la surface radiale du plateau entre un congé de rigidification d'attaque 205 de la pale et un congé de rigidification de fuite 206 d'une pale voisine.

La figure 5 représente une partie du ventilateur 20 vu axialement comprenant des indications de plan de coupe A et coupe C d'une pale 201.

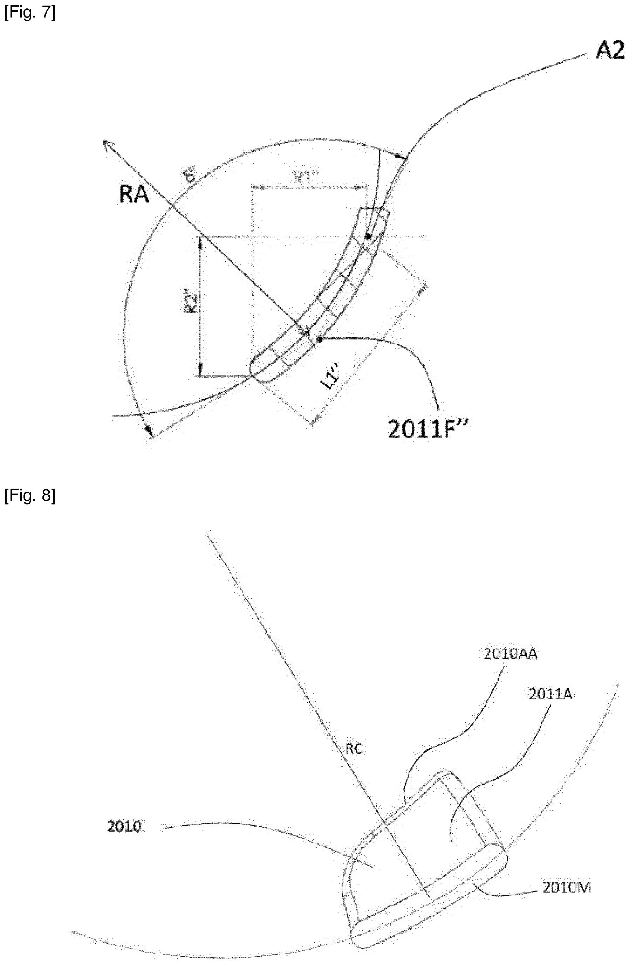

La figure 6 représente la pale 201 indiquée sur la figure 5 selon la coupe C avec le plateau 200. La figure 7 représente la pale 201 indiquée sur la figure 5 selon la coupe A.

Le bord de maintien 2010M est représenté sur la figure 6 par une double flèche. Dans cet exemple de ce troisième mode de réalisation, qui est applicable au ventilateur des premier et deuxième modes de réalisation, la paroi 201 de la pale 20 a une épaisseur constante. La figure 6 montre par deux traits la séparation entre la paroi 2010 et les congés de rigidification d'attaque 205 et de fuite 206. La pale 201 est donc à épaisseur constante jusqu'à une portion de fixation comprenant le bord de maintien 2010M.

La coupe C de la figure 5 est dans un plan parallèle à l'axe de rotation X et perpendiculaire à un plan P1 comprenant l'axe de rotation X et passant par le centre du bord libre d'attaque à flux radial 2010AR de la paroi 2010 de la pale 201.

Dans l'exemple du premier et troisième mode de réalisation, la paroi 2010 de l'au moins une pale à double orientation de flux comprend un rayon de courbure axial RA dont l'axe est dans un plan perpendiculaire à l'axe de rotation X, tel que la surface d'attaque 2011A est concave et la surface de fuite 2011F est convexe selon ce rayon de courbure RA c'est-à-dire selon un référentiel pris au centre de la pale. Le rayon de courbure axial RA est représenté sur la figure 7.

La paroi 2010 comprend un angle de courbure axial $\delta$ compris entre 130 degrés et 160 degrés, l'angle de courbure $\delta$ étant mesuré, dans le plan de coupe C, entre :

- un plan extérieur P2 passant par une arête d'attaque 2010AA' du bord libre d'attaque à flux axial 2010AA et un milieu axial 2011F' de la surface de fuite 2011F et

- un plan intérieur P3 passant par un premier point de mesure A1 situé au milieu du bord de maintien 2010M, autrement dit au milieu de l'épaisseur de la paroi 2010 sur le bord de maintien 2010M, et le milieu axial 2011F' de la surface de fuite 2011F.

Dans cet exemple de ce troisième mode de réalisation applicable également au premier mode de réalisation, la pale 201 comprend un ratio de courbure $\delta$ /L1 de l'angle de courbure axial $\delta$ divisé par une longueur de pale L1 mesurée entre le milieu du bord de maintien qui correspond au premier point de mesure A1 et l'arête d'attaque 2010AA' du bord libre d'attaque à flux axial 2010AA qui est compris entre 8 et 18.

[Math. 1]

$$8 \leq \frac{\delta}{L1} \leq 18$$

Par exemple, la longueur de pale L1 est compris entre 10 mm et 30 mm.

Notamment dans cet exemple, et l'exemple du premier mode de réalisation, le ratio de courbure δ/L1 augmente dans la pale 201 en déplaçant :

- l'angle de courbure axial δ à un angle de courbure extérieur δ" vers l'extérieur situé au milieu 2011F" entre le milieu axial 2011F' de la surface de fuite 2011F et l'arête d'attaque 2010AA' bord libre d'attaque à flux axial 2010AA,

- le plan de coupe C au plan de coupe A de la figure 5 visible sur la figure 7 vers le bord libre de fuite à flux radial 2010FR et

- le premier point de mesure A1 à un deuxième point de mesure A2 situé au milieu de l'épaisseur de la paroi 200, plus éloigné du bord de maintien 2010M.

[Math. 2]

$$\frac{\delta}{L1} \leq \frac{\delta"}{L1"}$$

Autrement dit, l'angle de courbure δ ainsi que le ratio de courbure sont progressifs lorsqu'on se déplace du bord libre d'attaque à flux radial 2010AR vers le bord libre de fuite à flux radial 2010FR. Cela permet d'optimiser le refroidissement global de la machine.

Selon cet exemple de ce troisième et deuxième mode de réalisation, la pale à double orientation de flux comprend en outre un ratio d'inclinaison R2/R1 compris entre 1 et 2, dans lequel :

- une hauteur d'arête d'attaque R2 est mesurée entre l'arête d'attaque 2010AA' du bord libre d'attaque à flux axial 2010AA et la surface radiale extérieure 2001 du plateau 200, et

- une longueur de projection d'arête d'attaque R1 est mesurée entre la projection de l'arête d'attaque 2010AA' du bord libre d'attaque à flux axial 2010AA sur la surface radiale extérieure 2001 du plateau 200 et le premier point de référence A1.

[Math. 3]

$$1 \leq \frac{R2}{R1} \leq 2$$

En outre dans cet exemple de ce troisième mode de réalisation comme par exemple dans le premier mode de réalisation, le ratio d'inclinaison R2/R1 de chacune des pales augmente dans la pale en déplaçant le plan de coupe C vers le plan de coupe A c'est-à-dire vers le bord libre de fuite à flux radial 2010FR et en déplaçant le premier point de mesure A1 au deuxième point de mesure A2.

[Math. 4]

$$\frac{R2}{R1} \leq \frac{R2"}{R1"}$$

La figure 8 représente une vue de la pale 201 vue axialement du plateau 200.

Dans cet exemple de ce troisième mode de réalisation, applicable également au ventilateur des premier et deuxième modes de réalisation, la paroi 200 comprend un rayon de courbure radial RC. Ce rayon est représenté sur la figure 8 par un rayon d'un cercle compris dans un plan radial par rapport à l'axe de rotation tel que la surface d'attaque 1011A, 2011A soit concave et la surface de fuite 1011F, 2011F soit convexe selon ce rayon de courbure radial, c'est-à-dire selon un référentiel pris au centre de la pale. Autrement dit, la paroi 2010 s'étend dans une direction radiale suivant un arc de cercle dont l'axe du cercle est compris dans un plan parallèle à l'axe de rotation.

On peut voir que le rayon de courbure radial RC est 3 fois supérieure à celui du rayon de courbure axial RA.

Dans un autre exemple non représenté des trois modes de réalisation, le plateau 200 comprend des encoches ou des ouvertures entre les pales 20 pour améliorer le refroidissement du rotor.

**Revendications**

1. Ventilateur (10, 20) d'un rotor de machine électrique tournante, comprenant :

   - une ouverture axiale (203) d'un axe de rotation (X) ;
   - un plateau (200, 100) s'étendant dans un plan transversal par rapport à l'axe de rotation (X) et comprenant : une surface radiale intérieure (1000, 2000) destinée à être en vis-à-vis du rotor, une surface radiale extérieure (1001, 2001), et dans lequel l'ouverture axiale (203) traverse le plateau (100, 200) de la surface radiale intérieure (1000, 2000) à la surface radiale extérieure (1001, 2001) ;
   - des pales (101, 201) comprenant chacune :

     ∘ un bord de maintien (2010M) s'étendant du plateau (200, 100) pour maintenir la pale au plateau (200, 100),

○ une paroi (1010, 2010) de ventilation s'étendant en saillie du bord de maintien (2010M) et comprenant un bord libre d'attaque à flux radial (2010AR), un bord libre de fuite à flux radial (1010FR, 2010FR) opposé au bord libre d'attaque à flux radial (2010AR) et un bord libre d'attaque à flux axial (1010AA, 2010AA) s'étendant du bord libre d'attaque à flux radial (2010AR) au bord libre de fuite à flux radial (1010FR, 2010FR), le bord libre d'attaque à flux axial (1010AA, 2010AA) étant situé à l'opposé axialement du bord de maintien (2010M), ladite paroi (1010, 2010) comprenant une surface d'attaque (1011A, 2011A) et une surface de fuite (1011F, 2011F), lesdites surfaces étant délimitées par lesdits bords, la surface d'attaque (1011A, 2011A) étant la surface poussant l'air lors de la rotation du ventilateur ;

- le ventilateur (10, 20) étant **caractérisé en ce qu'**une projection axiale (P2010AA) du bord libre d'attaque à flux axial (2010AA) d'au moins une pale (101, 201) sur un plan transversal du plateau (200, 100) s'étend en dehors du bord de maintien (2010M).

2. Ventilateur (10, 20) selon la revendication 1, dans lequel le bord de maintien (2010M) est incliné par rapport à un rayon de l'axe de rotation (X).

3. Ventilateur (10, 20) selon la revendication 1 ou 2, dans lequel la paroi (1010, 2010) comprend un rayon de courbure radial (RC) s'étendant dans un plan transversal à l'axe (X) de manière à ce que la surface d'attaque (1011A, 2011A) soit concave et la surface de fuite (1011F, 2011F) soit convexe selon ce rayon de courbure radial (RC).

4. Ventilateur (10, 20) selon l'une des revendications précédentes, dans lequel la projection axiale (P2010AA) d'au moins une portion du bord libre d'attaque à flux axial (1010AA, 2010AA) sur le plateau (200, 100) s'étend sur au moins une portion de la surface radiale du plateau (200, 100) entre deux pales (101, 201).

5. Ventilateur (10, 20) selon la revendication 4, dans lequel la paroi (1010, 2010) d'au moins une pale (101, 201) comprend un rayon de courbure axial (RA) s'étendant dans un plan parallèle à l'axe (X) de manière à ce que la surface d'attaque (1011A, 2011A) soit concave et la surface de fuite (1011F, 2011F) soit convexe selon ce rayon de courbure axial (RA).

6. Ventilateur (10, 20) selon la revendication 4 ou 5, dans lequel la paroi (1010, 2010) d'au moins une pale présente un angle de courbure axial ($\delta$) compris entre 130° et 160°, ledit angle ($\delta$) étant mesuré dans un plan de coupe de la pale parallèle à l'axe de rotation et perpendiculaire à un plan comprenant l'axe de rotation et passant par le centre du bord libre d'attaque à flux radial (2010AR) de la paroi (1010, 2010) de la pale, l'angle de courbure axial ($\delta$) étant situé entre :

   - un plan extérieur (P2) passant par une arête d'attaque (2010AA') du bord libre d'attaque à flux axial (1010AA, 2010AA) et un milieu axial de la surface de fuite (1011F, 2011F) et
   - un plan intérieur (P3) passant par un premier point de mesure (A1) situé au milieu du bord de maintien (2010M) et ledit milieu axial de la surface de fuite (1011F, 2011F).

7. Ventilateur (10, 20) selon la revendication 6 dans lequel au moins une pale (101, 201) est configurée de manière à comporter un ratio de courbure ($\delta$/L1) de l'angle de courbure axial ($\delta$) divisé par une longueur de pale (L1), mesurée entre un milieu du bord de maintien (2010M) et l'arête d'attaque (2010AA') du bord libre d'attaque à flux axial (1010AA, 2010AA), compris entre 8 et 18.

8. Ventilateur (10, 20) selon l'une des revendications précédentes, dans lequel le bord libre de fuite à flux radial d'au moins une pale (201) comprend un rayon maximum (D2) par rapport à l'axe de rotation (X) supérieur au rayon maximum (D1) du plateau par rapport audit axe (X) pris au niveau de ladite pale (201).

9. Rotor (1) d'une machine électrique comprenant une roue polaire comprenant un flanc et un ventilateur (10, 20), selon l'une des revendications précédentes, fixé à la roue polaire (12) en ayant la surface intérieure radiale (1000, 2000) contre le flanc de ladite roue polaire (12).

10. Machine électrique tournante comprenant un rotor (1) selon la revendication 9.

[Fig. 1]

[Fig. 2]

[Fig. 3]

[Fig. 4]

[Fig. 5]

[Fig. 6]

[Fig. 7]

[Fig. 8]

**Europäisches Patentamt**
**European Patent Office**
**Office européen des brevets**

# RAPPORT DE RECHERCHE EUROPEENNE

Numéro de la demande

EP 20 19 6246

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2003/030334 A1 (VASILESCU CLAUDIU [FR] ET AL) 13 février 2003 (2003-02-13) <br> * figure 2 * <br> * alinéas [0050] - [0057] * <br> ----- | 1,3-10 | INV. <br> F04D17/06 <br> F04D29/30 <br> H02K9/06 |
| X | DE 44 30 073 A1 (BOSCH GMBH ROBERT [DE]) 29 février 1996 (1996-02-29) <br> * figure 6 * <br> * colonne 5, lignes 32-52 * <br> * colonne 2, lignes 45-60 * <br> ----- | 1,3-5, 8-10 | |
| X | FR 2 602 925 A1 (DUCELLIER & CIE [FR]) 19 février 1988 (1988-02-19) <br> * figures 2-4 * <br> ----- | 1,2,4,5 | |

DOMAINES TECHNIQUES RECHERCHES (IPC)

F04D
H02K

Le présent rapport a été établi pour toutes les revendications

| Lieu de la recherche | Date d'achèvement de la recherche | Examinateur |
|---|---|---|
| La Haye | 5 février 2021 | Ingelbrecht, Peter |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 19 6246

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-02-2021

| Document brevet cité au rapport de recherche | Date de publication | Membre(s) de la famille de brevet(s) | Date de publication |
|---|---|---|---|
| US 2003030334 A1 | 13-02-2003 | EP 1358707 A1<br>FR 2820558 A1<br>US 2003030334 A1<br>WO 02063748 A1 | 05-11-2003<br>09-08-2002<br>13-02-2003<br>15-08-2002 |
| DE 4430073 A1 | 29-02-1996 | DE 4430073 A1<br>FR 2724070 A1<br>IT MI951752 A1<br>JP H0870560 A | 29-02-1996<br>01-03-1996<br>26-02-1996<br>12-03-1996 |
| FR 2602925 A1 | 19-02-1988 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 2685572 A